# EUROPEAN PATENT SPECIFICATION

(11) **EP 3 036 881 B1**
(45) Date of publication and mention of the grant of the patent: **21.08.2019**
(21) Application number: 14766278.7
(22) Date of filing: 26.08.2014
(51) Int. Cl.: H04L 29/06, G06Q 30/06, G06Q 50/14

(54) **SYNCHRONIZING PASSENGER CHECK-IN WITH THE LOCAL CACHING OF CLOUD-BASED MEDIA ON A VEHICLE**
SYNCHRONISIERUNG VON PASSAGIERABFERTIGUNG MIT DER LOKALEN CACHESPEICHERUNG VON CLOUD-BASIERTEN MEDIEN BEI EINEM FAHRZEUG
SYNCHRONISATION D'ENREGISTREMENT DE PASSAGERS AVEC LA MÉMOIRE CACHE LOCALE DE CONTENUS MULTIMÉDIAS EN NUAGE SUR UN VÉHICULE

(30) Priority: 06.09.2013 US 201314019650
(43) Date of publication of application: 29.06.2016
(73) Proprietor: Google LLC, Mountain View, CA 94043 (US)
(72) Inventor: TICKNER, Simon, Mountain View, California 94043 (US); COHEN, Richard Zarek, Mountain View, California 94043 (US)
(74) Representative: Anderson, Oliver Ben
(86) International application number: PCT/US2014/052734
(87) International publication number: WO 2015/034711

(56) References cited:
- WO-A2-2008/031114
- US-A1- 2001 037 360
- US-A1- 2009 307 729
- Jesse Hollington: "Listening to iTunes Match tracks on an airplane | iLounge Article", iLounge, 20 June 2013 (2013-06-20), XP055153307, Retrieved from the Internet: URL:http://www.ilounge.com/index.php/artic les/comments/listening-to-itunes-match-tra cks-on-an-airplane [retrieved on 2014-11-17]
- OMA OPEN MOBILE ALLIANCE: "DRM Rights Expression Language - Approved Version 2.1 - 14 Oct 2008 - OMA-TS-DRM-REL-V2_1-20081014-A", OMA-TS-DRM-REL-V2_1-20081014-A , no. Approved Version 2.1 14 October 2008 (2008-10-14), pages 1-67, XP002595849, Retrieved from the Internet: URL:http://www.openmobilealliance.org/Tech nical/release_program/docs/DRM/V2_1_1-2010 0406-A/OMA-TS-DRM_REL-V2_1-20081014-A.pdf [retrieved on 2010-08-10]

## Description

### BACKGROUND

A user may have rights to access media in cloud-based storage. Such access rights may include the right to play, modify and/or share such media. The user may wish to access the media while traveling in a vehicle such as an airplane, a rental car or a bus. The media may not be available to be downloaded at all times during travel, especially when a rental car is out of range of a network connection or when an airplane is in flight.

US2001/0037360 A1 teaches the method of providing a traveller access to a repository over an information network by means of an access point apparatus located at a transit terminal. The traveller can download information content hosted on the repository for off-line viewing. The downloaded information content is stored on a mobile storage medium. The storage medium is given to the traveller and may be used later by the traveller to access the data, when traveling for example. The information content may also be downloaded onto a storage medium being an on-board component of a means of transportation. The traveller accesses the information network using a device provided at an assigned traveling location.

### BRIEF SUMMARY

According to an implementation of the disclosed subject matter, a media item to which a user has access rights may be received. A vehicle having a vehicle-based media system in which the user is to travel can be identified. The media item may store the media item at the vehicle-based media system. A first signal about the vehicle can be received and an authorized period during which the media may be accessed can be determined based on the received first signal. A request from the user may be received to access the media. The implementation can determined that the requester is authorized to access the media and provide it to the requester through the vehicle-based media system. The implementation may determine that the authorized period to access the media has expired and delete the media from the vehicle.

An implementation of the disclosed subject matter may include a processor that is configured receive a media item to which a user has access rights. The processor may be configured to identify a vehicle in which the user will travel. The processor may determine an authorized period during which the media may be accessed based on a received first signal about the vehicle. It can receive a request for the media from a requester and verify that the requester is authorized to access the media. The processor may provide the requested media to the verified requester through the vehicle-based media system. The processor may delete the media from the vehicle when the authorized period expires.

Systems and techniques according to the present disclosure allow for local caching of cloud-based media to a vehicle having a vehicle-based media system. Additional features, advantages, and implementations of the disclosed subject matter may be set forth or apparent from consideration of the following detailed description, drawings, and claims. Moreover, it is to be understood that both the foregoing summary and the following detailed description include examples and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows a computer according to an implementation of the disclosed subject matter.
FIG. 2 shows a network configuration according to an implementation of the disclosed subject matter.
FIG. 3 shows a method according to an implementation of the disclosed subject matter.

### DETAILED DESCRIPTION

Implementations in accordance with the disclosed subject matter may cache a user's cloud-based media on a vehicle in which the user is to be a passenger, such as a passenger airplane or a rental car. An implementation can receive a media item such as a movie, a song, a playlist and user documents and the like. It may identify a vehicle with vehicle-based media system on which the user is to be passenger. It may cause the media item to be stored at the identified vehicle. It may receive a signal about the vehicle, such as a signal that identifies an expected departure time from an origin and expected arrival time at a destination. The implementation may determine an authorized period for the media item to be accessible based on the received signal. For example, the implementation may determine that the stored media item is to be accessible by the user from ten minutes after the departure time until fifteen minutes before the arrival time. During the authorized period, the implementation may provide the media item stored at the vehicle to an authorized requester. When the implementation determines that the authorized period for the media has expired, it can cause the media item to be deleted from storage at the vehicle-based media system.

In an implementation, an airline customer may desire to have the music on her favorite playlist made available to her during her flight. As part of the process of purchasing her ticket, the user may identify the specific playlist or song(s) that they wish to access while on the airplane. An implementation in accordance with the disclosed subject matter may identify the particular airplane in which the user is scheduled to travel. The implementation may cause the media item or items designated by the user to be stores on the airplane's media system. It may receive a signal about the airplane to determine an authorized period for the media. For example, the authorized period may start after the airplane has reached a threshold altitude and/or speed. The implementation may receive a request from the user to play the music stored at the airplane media system. The implementation may authenticate the requester to be the user authorized to access the stored media. Examples of a valid authentication may include presenting a four-digit pin, presenting a user identifier and password, presenting a bar code to a reader on the airplane, bringing a device with Near Field Communication (NFC) capability in proximity of a NFC reader on the airplane, etc. Upon validating the user's credentials, the implementation may provide the media to the requesting user. The implementation may determine that the authorized period for the media has expired and delete the media from the vehicle-based media system. For example, the implementation may receive another signal from the vehicle (or a third party, such as a flight tracker service) indicating that the airplane's air speed and/or altitude has fallen below predetermined thresholds. Another way to determine that the authorized period has expired may be based on the actual or scheduled end of travel time.

As another example, a tour leader may desire to upload a media file to be accessed by members of the tour group during coach bus travel. During purchase, the leader may identify the media to be uploaded to the coach bus and may assign an authenticating token to be presented by a traveler in order to access the media during travel. An implementation in accordance with the disclosed subject matter may receive one or more media files, identify the coach bus to be used by the group, and store the media to the identified bus. The implementation may receive a signal about the vehicle and may determine an authorized period for the media file based on the received signal. For example, the authorization period may start once the coach bus has left the lot at the departure location or when the implementation receives a code entered into the system by the tour group leader. The implementation may receive a request from a tour member on the bus to access a media item, such as a narrative or segment relating to a place of interest at or near the bus at a given point during the trip. The implementation may verify that the requester is authorized to access the media by validating a received token. The implementation may then provide the requested media to the requester. The implementation may determine that the authorized period for accessing the stored media has expired at the end of the tour and may delete the media file from the tour bus media system.

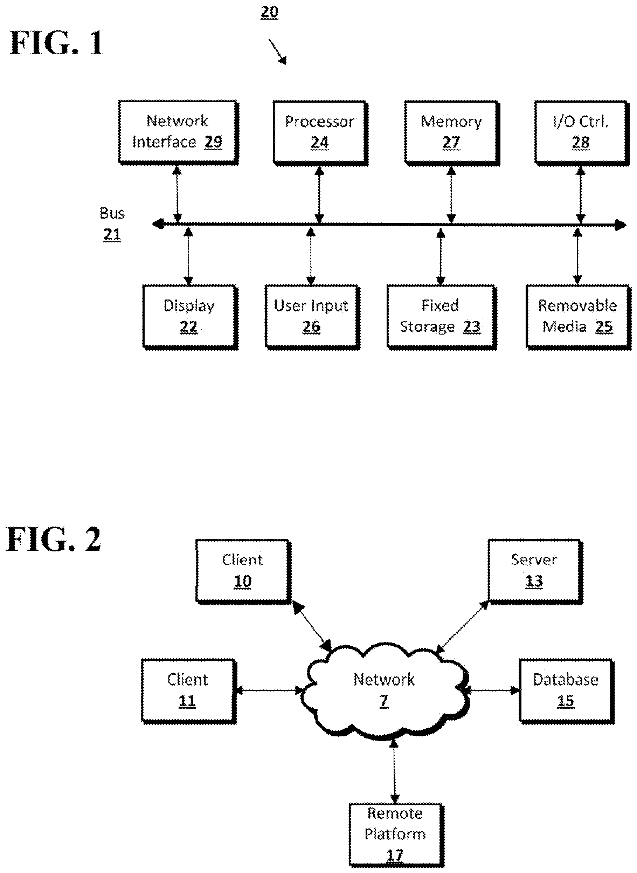

Implementations of the presently disclosed subject matter may be implemented in and used with a variety of component and network architectures. FIG. 1 is an example computer 20 suitable for implementing implementations of the presently disclosed subject matter. The computer 20 includes a bus 21 which interconnects major components of the computer 20, such as a central processor 24, a memory 27 (typically RAM, but which may also include ROM, flash RAM, or the like), an input/output controller 28, a user display 22, such as a display or touch screen via a display adapter, a user input interface 26, which may include one or more controllers and associated user input or devices such as a keyboard, mouse, WiFi/cellular radios, touchscreen, microphone/speakers and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM can include the main memory into which the operating system and application programs are loaded. The ROM or flash memory can contain, among other code, the Basic Input-Output system (BIOS) which controls basic hardware operation such as the interaction with peripheral components. Applications resident with the computer 20 can be stored on and accessed via a computer readable medium, such as a hard disk drive (e.g., fixed storage 23), an optical drive, floppy disk, or other storage medium 25.

The fixed storage 23 may be integral with the computer 20 or may be separate and accessed through other interfaces. A network interface 29 may provide a direct connection to a remote server via a telephone link, to the Internet via an Internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computer to communicate with other computers via one or more local, wide-area, or other networks, as shown in FIG. 2.

Many other devices or components (not shown) may be connected in a similar manner (e.g., document scanners, digital cameras and so on). Conversely, all of the components shown in FIG. 1 need not be present to practice the present disclosure. The components can be interconnected in different ways from that shown. The operation of a computer such as that shown in FIG. 1 is readily known in the art and is not discussed in detail in this application. Code to implement the present disclosure can be stored in computer-readable storage media such as one or more of the memory 27, fixed storage 23, removable media 25, or on a remote storage location.

FIG. 2 shows an example network arrangement according to an implementation of the disclosed subject matter. One or more clients 10, 11, such as local computers, smart phones, tablet computing devices, and the like may connect to other devices via one or more networks 7. The network may be a local network, wide-area network, the Internet, or any other suitable communication network or networks, and may be implemented on any suitable platform including wired and/or wireless networks. The clients may communicate with one or more servers 13 and/or databases 15. The devices may be directly accessible by the clients 10, 11, or one or more other devices may provide intermediary access such as where a server 13 provides access to resources stored in a database 15. The clients 10, 11 also may access remote platforms 17 or services provided by remote platforms 17 such as cloud computing arrangements and services. The remote platform 17 may include one or more servers 13 and/or databases 15.

More generally, various implementations of the presently disclosed subject matter may include or be implemented in the form of computer-implemented processes and apparatuses for practicing those processes. Implementations also may be implemented in the form of a computer program product having computer program code containing instructions implemented in non-transitory and/or tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing implementations of the disclosed subject matter. Implementations also may be implemented in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that implements all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

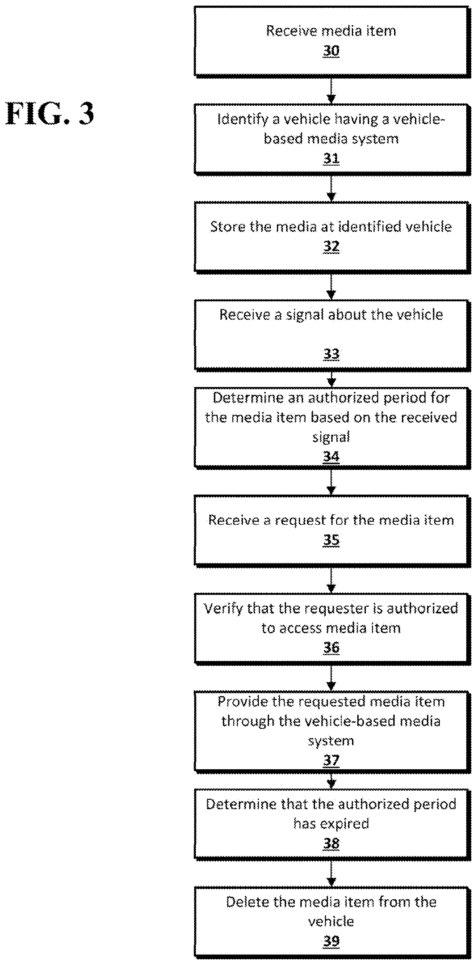

As shown in FIG. 3, an implementation may receive a media item, step 30, and identify a vehicle, the vehicle having a vehicle-based media system, step 31. The implementation may store the media at the identified vehicle, step 32, and receive a first signal about the vehicle, step 33, that can be used to determine an authorized period for the media item, step 34. A request for the media may be received, step 35, by a requester. The implementation may verify that the requester is authorized to access the media, step 36. The implementation may provide the media item to the requester, step 37. It may determine that the authorized period to access the media has expired, step 38, and cause the stored media item to be deleted from the vehicle-based media system, step 39.

In an implementation, a first media may be received during passenger check-in of a transportation vehicle. Examples of media can include video content, music content, speech content, image content, textual content, and online print (i.e., online newspapers, online magazines, etc.). The media content may be received directly or through a link. The link may be received from a user or detected by the implementation in a received file, such as a playlist or a media file. A link may include a pointer to a link, a URL address, a URI, an XML link, and an HTTP link. The implementation may then send a request to receive the media based on the media link. The implementation may also authenticate a user credential to access the media or pass along such a credential to a content manager. An authentication token or credential may be established during check-in for subsequent access to the first media.

An implementation of the disclosed subject matter may identify a vehicle corresponding as that chosen for travel by a user. The implementation may receive a vehicle identifier during user check-in and identify the vehicle on which the user is to be a passenger based on a matching vehicle identifier. In another implementation of the disclosed subject matter, a hierarchical list of vehicle identifiers may be received in the event that the vehicle chosen during check-in and potentially others are not available for use. For example, an out-of-order signal may be received from the intended travel vehicle and the implementation may identify an alternate vehicle for travel. Likewise, if the particular vehicle for travel is changed, an updated vehicle identifier may be received by the implementation.

An implementation of the disclosed subject matter may cause the media item to be stored at a media system in the identified vehicle. The media item may be associated with the user in media system memory. It may also be associated with information about the user, such as the user's seat number, an identifier of a player (such as a seatback video player) through which the user will access the media, etc.

In an implementation of the disclosed subject matter, a first signal about the vehicle may be received. The first signal may pertain to a vehicle speed, a vehicle condition, a vehicle availability, a vehicle location, a vehicle altitude, a vehicle departure and/or arrival status, etc.

An implementation of the disclosed subject matter may determine an authorized period for the first media based on the received first signal. For example, the first signal may pertain to vehicle speed, and the implementation may not authorize access to the media until the vehicle has reached a threshold minimum speed. For example, a vehicle speed may indicate that a car is has left a car rental center and is on the road, that an airplane has taken off, etc. Conversely, an implementation may deny access to the media when the vehicle speed is above a threshold maximum speed. For example, an implementation may deny access to a user document stored at an automobile media system when the automobile is moving because the user should not read the document while driving, for safety reasons. On the other hand, the same system may permit access to a music media item while the automobile is moving. In this way, an implementation may enforce different access thresholds based on the type of media item (e.g., document, audio only, video, etc.) As another example, a passenger may not be able to access media stored to an airplane during travel until a threshold minimum altitude has been reached. This may be implemented, for example, to ensure that the user is not accessing his media during the safety announcement at the beginning of the flight. Access may subsequently be denied if the airplane is traveling below a minimum threshold altitude as the flight crew asks the passengers to prepare for landing.

In an implementation of the disclosed subject matter, an authorized period for the first media may be determined based on a determined travel start time and a determined travel stop time. Access to the media may be denied prior to the travel start time and after the travel stop time. The travel start time may consist of a scheduled travel start time or an actual travel start time. For example, an airplane may be scheduled to depart at 5:00 AM PST but may not depart until 5:30 AM PST due to unexpected delays. The implementation may detect the discrepancy and may not begin to allow access to the media until 5:30 AM PST. Accordingly, the travel stop time may consist of a scheduled travel stop time or an actual travel stop time. For example, a train may be scheduled to arrive at its destination at 9:00 AM EST, but due to unexpected delays, the train may not arrive at its destination until 10:15 AM EST. The implementation may detect the discrepancy and may allow access to the media until 10:15 AM EST. Such a discrepancy may be detected based on a second signal about the vehicle received by the implementation.

An implementation of the disclosed subject matter may also determine an authorized period to access the media based on an override request from an authorized user. For example, the user during check-in may specify an authorized period to access the media. Alternatively, an authorized passenger action may determine start and stop times for the authorized period. For example, the authorized period may begin once a validated user credential has been received through the vehicle-based media system. Conversely, the authorized period may expire when the authorized user expressly terminates the authorized period or turns off the media system.

In an implementation of the disclosed subject matter, a request for the media item may be received through the vehicle-based media system. For example, a traveler can turn on an electronic device configured to deliver the media (such as a seatback video player or automobile audio system) and a signal may consequently be received by the implementation signifying a request from the user to access the media. The originating location of the request (such as a seat position, a player position, etc.) may be used to authenticate the request and to deliver the media. Upon receiving the request through the vehicle-based media system, the implementation may identify a seat corresponding to the source of the request. The identified seat may be compared to the seat assignment of the requesting user. If the seats match, then the requested media may be sent to the player at the seat location. If the seats do not match, the request to access the media may be denied.

An implementation of the disclosed subject matter may verify that the requester is authorized to access the media. The verification may include receiving a requester credential through the vehicle-based media system and authenticating it based on a master credential created during check-in. Alternatively, the stored media may have low protection settings and the mere presence of a requester may satisfy the step of verifying that the requester is authorized to access the media. In order to verify that the requester is authorized to access the media based on the requester's location, an implementation may determine the location of the requester, may determine the location of the vehicle, and may determine that the requester is within a threshold distance of the vehicle based on the determined location of the requester and the determined location of the vehicle. Determining the location of the user may be based, for example, upon the determined location of the user's smartphone, smart watch or other device. Verifying that the requester is authorized to access the media may include determining that the requester is authorized to receive a copy of the media, to use the media, to modify the media, to store the media, to share the media or to copy the media. The implementation may receive modifications to a media item, such as edits to a document of the user. Likewise, the implementation may receive a signal to share a media item with another user, to send it to an email address, smartphone address, to share it on a social network, etc. In response, the implementation may perform the requested action with respect to the media item. When a user modifies a media item such as a document, the implementation may synchronize the modifications with a version of the media item stored elsewhere, such as in the cloud. In an implementation, the modifications can be sent to a cloud-based storage when the user indicates that the changes should be saved, when the user closes the media item, automatically periodically or at or near the end of the authorized period, etc.

An implementation of the disclosed subject matter may determine that the authorized period has expired. The implementation may determine that the authorized period has expired based on an expected arrival time, an actual arrival time, a vehicle signal, a vehicle condition, a requester proximity to the vehicle, a vehicle location, a requester location, or a message from the requester. For example, if the travel vehicle enters an emergency state (e.g., vehicle failure or malfunction), the media may be automatically made to be inaccessible or be deleted from the travel vehicle. The media may also be deleted if the determined proximity of a requester to the vehicle is greater than a threshold distance. For example, if the implementation determines that the user is more than 15 meters from the vehicle, the media can be made inaccessible or be deleted. The distance of the user from the vehicle can be determined, for example, by measuring signal strength between a key fob for the vehicle and the vehicle itself. As another example, if the location of the travel vehicle does not agree with the scheduled or expected location of the travel vehicle throughout the course of travel, the implementation may determine that the authorized period has expired and suspend or terminate access to the media or delete the media from the vehicle media system storage.

In an implementation of the disclosed subject matter, a modified version of the media may be received from a verified passenger granted the right to modify the media. The implementation may generate tags and other metadata specifying where the verified passenger made edits to the media and the content of the edits. The implementation may upload the modified media to a storage element. For example, the implementation may upload the modified media to a storage element local to the transportation vehicle or to a remote storage element via a standard or custom protocol. An implementation can track the version of the media item by assigning an identifier to each version. For example, a first version number can be assigned to the media item in its original form and a second version number can be assigned to the media item as it is initially modified by the user. Subsequent version numbers can be assigned based on subsequent modifications. A version number can be assigned, for example, when the user indicates that a version of the media item is to be saved, stored, shared, sent, etc.

An implementation of the disclosed subject matter may delete the media from the vehicle. The media may be deleted by the implementation based on an expected arrival time, an actual arrival time, a vehicle signal, a vehicle condition, a requester proximity to the vehicle, a vehicle location, a requester location, or a message from the requester. The implementation may delete the media prior to the expiration of the authorized period to access the media. For example, if a message from the requester is received instructing the implementation to delete the media prior to the expected expiration of the authorized period, the implementation will delete the media. Conversely, the implementation may receive a signal from the vehicle altering a faulty mechanical or electrical state of the vehicle and delete the media.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method comprising:
receiving(30) a media item;
identifying (31) a vehicle having a vehicle-based media system;
storing (32) a media item at the identified vehicle in the media system;
receiving (33) a first signal about the vehicle, wherein the first signal comprises at least one from the group consisting of: a vehicle speed, a vehicle location and a vehicle altitude;
determining (34) an authorized period for the media item to be accessible based on the received first signal about the vehicle;
receiving (35) a request for the media item;
verifying (36) that the requester is authorized to access the media item;
providing (37) the requested media item to the verified requester using the vehicle-based media system;
determining (38) that the authorized period has expired; and
deleting (39) the media item from the vehicle.

2. The method of claim 1 , wherein the media item is a first media item and the first media item comprises a link to a second media item and further comprising sending a request based on the link.

3. The method of claim 2, wherein the step of sending the request based on the received link includes presenting a credential and wherein the step of receiving the second media item is based on the validity of the credential.

4. The method of claim 2, wherein the link to the second media item comprises at least one from the group consisting of: a pointer, a URL, and a URI and a credential.

5. The method of claim 1, wherein the step of determining the authorized period for the media item further comprises determining a travel start time and a travel stop time;
wherein the travel start time comprises at least one from the group consisting of: a scheduled travel start time and an actual travel start time; and
wherein the travel stop time comprises at least one from the group consisting of: a scheduled travel stop time and an actual travel stop time.

6. The method of claim 1, wherein the step of determining the authorized period for the media item further comprises receiving an instruction to override the determined authorized period with a user authorized period.

7. The method of claim 1, wherein the step of receiving a request for the media item comprises receiving a request through the vehicle-based media system and further comprising receiving a seat assignment for the user, identifying a seat corresponding to the source of the request through the vehicle-based media system, determining that the seat assignment for the user corresponds to the source of the request through the vehicle-based media system.

8. The method of claim 1, wherein the step of verifying that the requester is authorized to access the media item comprises receiving a requester credential and validating the requester credential.

9. The method of claim 1, wherein the step of verifying that the requester is authorized to access the media item comprises:
determining the location of the requester;
determining the location of the vehicle; and
determining that the requester is within a threshold distance of the vehicle based on the determined location of the requester and the determined location of the vehicle.

10. The method of claim 1, wherein the verifying that the requester is authorized to access the media item includes determining that the requester is authorized to at least one from the group consisting of: receive a copy of the media item, use the media item, to modify the media item, to store the media item, to share the media item and to copy the media item.

11. The method of claim 1, wherein the step of determining that the authorized period has expired is based on at least one from the group consisting of: an expected arrival time, an actual arrival time, a vehicle signal, a vehicle condition, a requester proximity to the vehicle, a vehicle location, a requester location, and a message from the requester.

12. The method of claim 1, further comprising receiving a second signal about the vehicle and wherein the determining that the authorized period has expired is based upon at least one of the received first signal about the vehicle and the received second signal about the vehicle.

13. The method of claim 1, further comprising receiving a modified version of the media item.

14. The method of claim 1, wherein the received media item is associated with a first version identifier and further comprising receiving a modified version of the media item, generating a second version identifier and storing the modified media item associated with the second identifier.

15. A system, comprising:
a memory (27); and
a processor (24) in connection with the memory, the processor configured to carry out the method of any preceding claim.

## Patentansprüche

1. Verfahren, umfassend.
Empfangen (30) eines Medienelementes;
Identifizieren (31) eines Fahrzeugs, das ein fahrzeugbasiertes Mediensystem aufweist;
Speichern (32) eines Medienelementes bei dem identifizierten Fahrzeug in dem Mediensystem,
Empfangen (33) eines ersten Signals über das Fahrzeug, wobei das erste Signal zumindest eines aus der aus einer Fahrzeuggeschwindigkeit, einem Fahrzeugstandort und einer Fahrzeughöhe bestehenden Gruppe umfasst,
Ermitteln (34) eines genehmigten Zeitraums, während dessen auf das Medienelement zugegriffen werden kann, basierend auf dem empfangenen ersten Signal über das Fahrzeug,
Empfangen (35) einer Anfrage nach dem Medienelement;
Verifizieren (36), dass der Anforderer zum Zugriff auf das Medienelement autorisiert ist;
Bereitstellen (37) des angeforderten Medienelementes an den verifizierten Anforderer unter Verwendung des fahrzeugbasierten Mediensystems;
Ermitteln (38), dass der genehmigte Zeitraum abgelaufen ist; und
Löschen (39) des Medienelementes aus dem Fahrzeug.

2. Verfahren nach Anspruch 1, wobei das Medienelement ein erstes Medienelement ist und das erste Medienelement einen Link zu einem zweiten Medienelement umfasst und ferner das auf dem Link basierende Senden einer Anfrage umfasst.

3. Verfahren nach Anspruch 2, wobei der Schritt des Sendens der Anfrage, basierend auf dem empfangenen Link, das Präsentieren eines Berechtigungsnachweises beinhaltet, und wobei der Schritt des Empfangens des zweiten Medienelementes auf der Gültigkeit des Berechtigungsnachweises basiert.

4. Verfahren nach Anspruch 2, wobei der Link zu dem zweiten Medienelement zumindest eines aus der aus einem Pointer, einer URL und einem URI und einem Berechtigungsnachweis bestehenden Gruppe umfasst.

5. Verfahren nach Anspruch 1, wobei der Schritt des Ermittelns des genehmigten Zeitraums für das Medienelement ferner das Ermitteln einer Reise-Startzeit und einer Reise-Stoppzeit umfasst;
wobei die Reise-Startzeit zumindest eines aus der aus einer geplanten Reise-Startzeit und einer tatsächlichen Reise-Startzeit bestehenden Gruppe umfasst, und
wobei die Reise-Stoppzeit zumindest eines aus der aus einer geplanten Reise-Stoppzeit und einer tatsächlichen Reise-Stoppzeit bestehenden Gruppe umfasst.

6. Verfahren nach Anspruch 1, wobei der Schritt des Ermittelns des genehmigten Zeitraums für das Medienelement ferner das Empfangen einer Anweisung, den ermittelten genehmigten Zeitraum durch einen von dem Benutzer genehmigten Zeitraum zu ersetzen, umfasst.

7. Verfahren nach Anspruch 1, wobei der Schritt des Empfangens einer Anfrage nach dem Medienelement das Empfangen einer Anfrage über das fahrzeugbasierte Mediensystem umfasst und ferner das Empfangen einer Sitzzuweisung für den Benutzer, das Identifizieren eines Sitzes, der der Quelle der Anfrage über das fahrzeugbasierte Mediensystem entspricht, und das Ermitteln, dass die Sitzzuweisung für den Benutzer der Quelle der Anfrage über das fahrzeugbasierte Mediensystem entspricht, umfasst.

8. Verfahren nach Anspruch 1, wobei der Schritt des Verifizierens, dass der Anforderer zum Zugriff auf das Medienelement autorisiert ist, das Empfangen eines Berechtigungsnachweises des Anforderers und das Validieren des Berechtigungsnachweises des Anforderers umfasst.

9. Verfahren nach Anspruch 1, wobei der Schritt des Verifizierens, dass der Anforderer zum Zugriff auf das Medienelement autorisiert ist, Folgendes umfasst:
Ermitteln des Standortes des Anforderers;
Ermitteln des Standortes des Fahrzeugs; und
Ermitteln, dass sich der Anforderer innerhalb einer einen Schwellenwert überschreitenden Entfernung von dem Fahrzeug befindet, basierend auf dem ermittelten Standort des Anforderers und dem ermittelten Standort des Fahrzeugs.

10. Verfahren nach Anspruch 1, wobei das Verifizieren, dass der Anforderer zum Zugriff auf das Medienelement autorisiert ist, das Ermitteln umfasst, dass der Anforderer zu zumindest einem aus der aus einer Empfangen einer Kopie des Medienelementes, Verwendung des Medienelementes, Speichern des Medienelementes, Teilen des Medienelementes und Kopieren des Medienelementes bestehenden Gruppe autorisiert ist.

11. Verfahren nach Anspruch 1, wobei der Schritt des Ermittelns, dass der genehmigte Zeitraum abgelaufen ist, zumindest auf einem aus der aus einer erwarteten Ankunftszeit, einer tatsächlichen Ankunftszeit, eines Fahrzeugsignals, einem Fahrzeugzustand, einer Nähe des Anforderers zu dem Fahrzeug, einem Fahrzeugstandort, einem Anfordererstandort und einer Nachricht von dem Anforderer bestehenden Gruppe basiert.

12. Verfahren nach Anspruch 1, ferner umfassend das Empfangen eines zweiten Signals über das Fahrzeug und wobei das Ermitteln, dass der genehmigte Zeitraum abgelaufen ist, zumindest auf einem aus dem empfangenen ersten Signal über das Fahrzeug und dem empfangenen zweiten Signal über das Fahrzeug basiert.

13. Verfahren nach Anspruch 1, ferner das Empfangen einer modifizierten Version des Medienelementes umfassend.

14. Verfahren nach Anspruch 1, wobei das empfangene Medienelement mit einer ersten Versionskennung assoziiert wird und ferner das Empfangen einer modifizierten Version des Medienelementes, Erzeugen einer zweiten Versionskennung und Speichern des modifizierten Medienelementes, das mit der zweiten Versionskennung assoziiert wird, umfassend.

15. System, umfassend:
einen Speicher (27); und
einen Prozessor (24), der mit dem Speicher verbunden ist, wobei der Prozessor konfiguriert ist, das Verfahren nach einem der vorstehenden Ansprüche auszuführen.

## Revendications

1. Procédé comprenant :
la réception (30) d'un élément multimédia ;
l'identification (31) d'un véhicule équipé d'un système multimédia basé sur un véhicule ;
le stockage (32) d'un élément multimédia dans le véhicule identifié dans le système multimédia,
la réception (33) d'un premier signal concernant le véhicule, où le premier signal comprend au moins un du groupe constitué d'une vitesse du véhicule, d'un emplacement du véhicule et d'une altitude du véhicule,
la détermination (34) d'une période autorisée pour que l'élément multimédia soit accessible sur base du premier signal reçu à propos du véhicule,
la réception (35) d'une demande de l'élément multimédia ;
la vérification (36) que le demandeur est autorisé à accéder à l'élément multimédia ;
la fourniture (37) de l'élément multimédia demandé au demandeur vérifié à l'aide du système multimédia basé sur le véhicule ;
la détermination (38) que la période autorisée a expiré, et
la suppression (39) de l'élément multimédia du véhicule.

2. Procédé selon la revendication 1, dans lequel l'élément multimédia est un premier élément multimédia et le premier élément multimédia comprend un lien vers un deuxième élément multimédia et comprenant en outre l'envoi d'une demande sur base du lien.

3. Procédé selon la revendication 2, dans lequel l'étape d'envoi de la demande sur base du lien reçu comprend la présentation d'un authentifiant et dans lequel l'étape de réception du deuxième élément multimédia est sur base de la validité de l'authentifiant.

4. Procédé selon la revendication 2, dans lequel le lien vers le deuxième élément multimédia comprend au moins un du groupe constitué d'un pointeur, d'une URL, d'un URI et d'un authentifiant.

5. Procédé selon la revendication 1, dans lequel l'étape de détermination de la période autorisée pour l'élément multimédia comprend en outre la détermination d'une heure de début de voyage et d'une heure d'arrêt de voyage ;
dans lequel l'heure de début de voyage comprend au moins un du groupe constitué : d'une heure de début de voyage programmée et d'une heure de début de voyage réelle, et
dans lequel l'heure d'arrêt de voyage comprend au moins un du groupe constitué : d'une heure d'arrêt de voyage programmée et d'une heure d'arrêt de voyage réelle.

6. Procédé selon la revendication 1, dans lequel l'étape de détermination de la période autorisée pour l'élément multimédia comprend en outre la réception d'une instruction pour remplacer la période autorisée déterminée avec une période autorisée par l'utilisateur.

7. Procédé selon la revendication 1, dans lequel l'étape de réception d'une demande pour l'élément multimédia comprend la réception d'une demande via le système multimédia basé sur le véhicule et comprend en outre la réception d'une attribution de siège pour l'utilisateur, l'identification d'un siège correspondant à la source de la demande via le système multimédia basé sur le véhicule, la détermination que l'attribution de siège pour l'utilisateur correspond à la source de la demande via le système multimédia basé sur le véhicule.

8. Procédé selon la revendication 1, dans lequel l'étape de vérification que le demandeur est autorisé à accéder à l'élément multimédia comprend la réception d'un authentifiant du demandeur et la validation de l'authentifiant du demandeur.

9. Procédé selon la revendication 1, dans lequel l'étape de vérification que le demandeur est autorisé à accéder à l'élément multimédia comprend :
la détermination de l'emplacement du demandeur ;
la détermination de l'emplacement du véhicule ; et
la détermination que le demandeur se trouve à une distance seuil du véhicule sur base de l'emplacement déterminé du demandeur et de l'emplacement déterminé du véhicule.

10. Procédé selon la revendication 1, dans lequel la vérification que le demandeur est autorisé à accéder à l'élément multimédia comprend la détermination que le demandeur est autorisé à au moins un du groupe constitué de - recevoir une copie de l'élément multimédia, utiliser l'élément multimédia, modifier l'élément multimédia, stocker l'élément multimédia, partager l'élément multimédia et copier l'élément multimédia.

11. Procédé selon la revendication 1, dans lequel l'étape de détermination que la période autorisée a expiré est sur base d'au moins un du groupe constitué : d'une heure d'arrivée prévue, d'une heure d'arrivée réelle, d'un signal de véhicule, d'une condition de véhicule, d'une proximité du demandeur au véhicule, d'un emplacement de véhicule, d'un emplacement de demandeur et d'un message du demandeur.

12. Procédé selon la revendication 1, comprenant en outre la réception d'un deuxième signal à propos du véhicule et dans lequel la détermination que la période autorisée a expiré est sur base d'au moins un du premier signal reçu à propos du véhicule et du deuxième signal reçu à propos du véhicule.

13. Procédé selon la revendication 1, comprenant en outre la réception d'une version modifiée de l'élément multimédia.

14. Procédé selon la revendication 1, dans lequel l'élément multimédia reçu est associé à un premier identificateur de version et comprenant en outre la réception d'une version modifiée de l'élément multimédia, la génération d'un deuxième identificateur de version et le stockage de l'élément multimédia modifié associé au deuxième identificateur.

15. Système comprenant :
une mémoire (27) ; et
un processeur (24) en relation avec la mémoire, le processeur configuré pour exécuter le procédé selon l'une quelconque des revendications précédentes.
